# EUROPEAN PATENT SPECIFICATION

(11) **EP 2 390 296 B1**
(45) Date of publication and mention of the grant of the patent: **20.06.2018**
(21) Application number: 11167466.9
(22) Date of filing: 25.05.2011
(51) Int. Cl.: C09D 183/06, C09D 183/14, C09D 5/08, C23C 22/06, C23F 11/173

(54) **Aqueous siloxane coating composition, making method, surface treating agent, surface treated steel, and coated steel**
Wässrige Siloxanbeschichtungszusammensetzung, Herstellungsverfahren Oberflächenbehandlungsmittel, oberflächenbehandelter Stahl und beschichteter Stahl
Composition de revêtement de siloxane aqueux, procédé de fabrication, agent de traitement de surface, acier traité en surface et acier revêtu

(30) Priority: 28.05.2010 JP 2010122293
(43) Date of publication of application: 30.11.2011
(73) Proprietor: Shin-Etsu Chemical Co., Ltd., Chiyoda-ku, Tokyo (JP)
(72) Inventor: Tsuchida, Kazuhiro, Annaka-shi Gunma (JP)
(74) Representative: Stoner, Gerard Patrick

(56) References cited:
- EP-A1- 1 798 260
- WO-A1-00/24831
- DE-A1- 19 816 136
- DE-A1-102007 058 712
- US-A- 5 314 731
- US-A1- 2006 078 717
- US-A1- 2006 083 936

## Description

This invention relates to an aqueous siloxane coating composition comprising a hydrolyzate and/or (partial) hydrolytic condensate of a silane, a method for preparing the composition, a surface treating agent comprising the composition, a steel article treated therewith, and a coated steel article.

### BACKGROUND

Problems of coating systems using well-known compositions based on silane hydrolyzate and silica sol are the presence of chloride resulting from hydrolysis of chlorosilanes and a high fraction of volatile organic solvent which is added as the stabilizer and diluent for the alcohol and silanol resulting from hydrolysis of alkoxysilanes.

Using the partial hydrolyzate of alkoxysilane and acidic hydrolysis catalysts, a silane sol-gel coating composition having a certain degree of storage stability can be prepared. This composition, however, is limited to an organic solvent system, typically alcohol system. As is well known in the art, the use of a sufficient amount of water for full hydrolysis of alkoxysilanes and a high solids content lead to a drastic reduction in the storage stability of the system. In the course of preparing a coating composition, it becomes difficult to control the hydrolytic condensation of silane, leading to molecular weight buildup and gelation.

JP-A 2009-524709 discloses a water-dilutable sol-gel composition comprising a glycidyloxypropylalkoxysilane, an aqueous silica sol, an organic acid, and an organometallic compound of titanium or zirconium as essential components, that is, an aqueous siloxane coating composition having a low alcohol content. The intended application of this composition includes corrosion control, primer and other coats although the patent document lacks examples demonstrating the effectiveness. The use of a large amount of the organometallic compound as the crosslinker has a possibility that when the cured coat is kept in contact with water for a long period of time, the composition may fail to exert sufficient water resistance because the organometallic compound participates in cleavage of siloxane bonds.

Therefore, it would be desirable to have an aqueous siloxane coating composition which is substantially free of organic solvents, typically alcohols and stable at room temperature, and a surface treating agent capable of forming a cured coat having satisfactory water resistance.

### Citation List

Patent Document 1: JP-A 2009-524709 (WO 2007085320)

DE 19816136 proposes a process for preparing a composition for producing nanostructured mouldings and layers including contacting an aqueous and/or alcoholic sol of a compound of an element selected from silicon and metals with species possessing hydrolysable alkoxy groups and comprising at least one organically modified alkoxysilane or a precondensate derived therefrom, under conditions which lead to hydrolysis of the species, and subsequent removal of the alcohol formed and any alcohol originally present.

US 2006/083936 proposes silicone compositions comprising a silicone resin which is obtained by cohydrolytic condensation of (A) a hydrolyzable organosilicon compound, (B) an alkoxysilane and/or (C) a fluorine-containing hydrolyzable organosilicon compound.

An object of the invention is to provide aqueous siloxane coating compositions which can be low in or substantially free of organic solvents, especially alcohols, stable during storage at room temperature, and form cured coats having satisfactory water resistance which are effective e.g. for metal corrosion control. Other aspects are methods, for preparing the compositions, their use for treating metal e.g. steel articles, e.g. before applying a subsequent coating layer, surface treating agents comprising them and steel articles surface-treated with such agents, optionally further coated.

The inventor has found that aqueous siloxane coating compositions as defined below are stable during storage at room temperature, despite the absence of organic solvents, typically alcohols, which are generally used for keeping the composition stable, and forms a cured coat having satisfactory water resistance, that the composition may constitute a surface treating agent effective for metal corrosion control, and that a steel article treated with the agent is protected against corrosion.

In one aspect, the invention provides an aqueous siloxane coating composition comprising a cohydrolyzate and/or (partial) cohydrolytic condensate as set out in claim 1.

In a preferred embodiment, component (i) is a compound having the general formula (1): 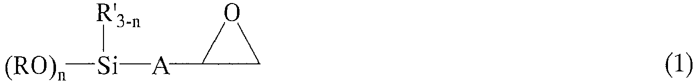 wherein R and R' are each independently alkyl of 1 to 4 carbon atoms, A is a divalent hydrocarbon group of 1 to 10 carbon atoms which may be separated (interrupted) by one or more oxygen atoms, and n is an integer of 1 to 3.

Component (ii) is a compound having the general formula (2). 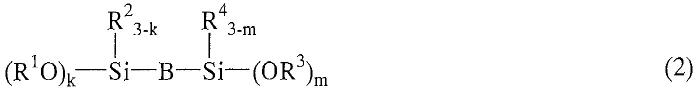 Herein R¹ to R⁴ are each independently alkyl of 1 to 4 carbon atoms, B is an optionally substituted, divalent straight or branched hydrocarbon group of 1 to 20 carbon atoms which may be separated (interrupted) by one or more heteroatoms selected from oxygen, sulfur and nitrogen atoms or by carbonyl carbon, k and m are each independently an integer of 1 to 3.
Component (ii) may be a compound having the general formula (3): 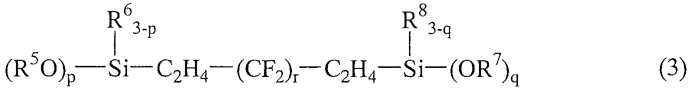 Herein R⁵ to R⁸ are each independently alkyl of 1 to 4 carbon atoms, p and q are each independently an integer of 1 to 3, and r is an integer of 1 to 10.

Preferably components (i) and (ii) are in a molar ratio (i)/(ii) of from 1.0 to 50.

Preferably a ratio of the solids weight of component (iii) to the total weight of components (i) and (ii), or components (i), (ii) and (iv) if component (iv) is used, is (iii)/[(i)+(ii)+(iv)] ≤ 1.0.

Preferably the composition has a solids content of 0.5 to 60% by weight.

In another aspect, the invention provides a method for preparing the aqueous siloxane coating composition defined above, as set out in claim 10.

In a further aspect, the invention provides a surface treating agent comprising primarily the aqueous siloxane coating composition defined above.

In a still further aspect, the invention provides a steel article which is surface treated with the surface treating agent.

In a still further aspect, the invention provides a coated steel article comprising a steel article which is surface treated with the surface treating agent and a coat layer overlying the treated surface.

In a still further aspect, the invention provides a use of a composition as set out in claim 14.

### ADVANTAGEOUS EFFECTS

Since a hydrolyzate and/or (partial) hydrolytic condensate of an epoxy-containing silane coupling agent and an organosilicon compound having at least two hydrolyzable silyl groups in a molecule as the crosslinker component is used, the aqueous siloxane coating composition is stable at room temperature and able to form a film or coat. A cured coat of the composition undergoes no cleavage of siloxane even in the event of continuous contact with water, and exerts satisfactory water resistance and corrosion control.

### FURTHER EXPLANATIONS; OPTIONS AND PREFERENCES

In the disclosure, the singular forms "a," "an" and "the" include plural referents unless the context clearly dictates otherwise. "Optional" or "optionally" means that the subsequently described event or circumstances may or may not occur, and that description includes instances where the event or circumstance occurs and instances where it does not.

The aqueous siloxane coating composition which is stable at room temperature has a cohydrolyzate and/or (partial) cohydrolytic condensate dissolved and/or dispersed in water. The cohydrolyzate and/or (partial) cohydrolytic condensate is obtained from hydrolysis of
(i) an epoxy-containing silane coupling agent and (ii) an organosilicon compound having at least two hydrolyzable silyl groups in a molecule, but free of epoxy group, or component (i), component (ii), and (iv) a hydrolyzable silyl group-containing organosilicon compound other than components (i) and (ii),
   optionally in the presence of (iii) an aqueous silica sol. The composition has an alcohol content of up to 5% by weight, preferably up to 2% by weight, more preferably up to 1% by weight, and even more preferably up to 0.1% by weight. Most preferably the composition is essentially free of alcohol.

### (i) Epoxy-containing silane coupling agent

The epoxy-containing silane coupling agent as component (i) is not particularly limited as long as it is a compound having both an epoxy group and a hydrolyzable silyl group in a molecule. Preferably it is a compound having the general formula (1). 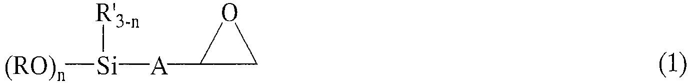 Herein R and R' are each independently alkyl of 1 to 4 carbon atoms, A is a divalent hydrocarbon group of 1 to 10 carbon atoms which may be separated by an oxygen atom, and n is an integer of 1 to 3.

Examples of the C₁-C₄ alkyl group represented by R and R' include methyl, ethyl, propyl, isopropyl, n-butyl, sec-butyl, and tert-butyl. R and R' may be the same or different. Preferably R is methyl or ethyl, and R' is methyl.

A stands for a divalent hydrocarbon group, which is preferably alkylene group of 1 to 10 carbon atoms, more preferably 1 to 6 carbon atoms. The divalent hydrocarbon group may be separated by an oxygen atom (-O-). Also included are substituted hydrocarbon groups in which one or more hydrogen atoms are substituted by halogen atoms such as fluorine and chlorine. Preferably A is -CH₂-O-CH₂CH₂CH₂- or -CH₂-O-CH₂-, with the left-hand end being on the epoxy side.

The subscript n is an integer of 1 to 3, preferably 2 or 3, and more preferably 3.

Illustrative, non-limiting examples of component (i) include glycidoxypropyltrimethoxysilane, glycidoxypropylmethyldimethoxysilane, glycidoxypropyldimethylmethoxysilane, glycidoxypropyltriethoxysilane, glycidoxypropylmethyldiethoxysilane, glycidoxypropyldimethylethoxysilane, glycidoxymethyltrimethoxysilane, and glycidoxymethyltriethoxysilane.

### (ii) Organosilicon compound having at least two hydrolyzable silyl groups, but free of epoxy group

Component (ii) is an organosilicon compound having at least two hydrolyzable silyl groups (or silicon-bonded hydrolyzable groups) in a molecule, but free of epoxy group, which serves as a crosslinker. The organosilicon compound has at least two, preferably 2 to 10, hydrolyzable silyl groups in a molecule. For water resistance of a cured coat and applicability to metal substrates, a compound having the general formula (2) is used. 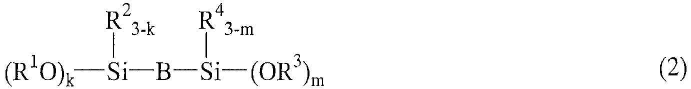 Herein R¹ to R⁴ are each independently alkyl of 1 to 4 carbon atoms, B is an optionally substituted, divalent straight or branched hydrocarbon group of 1 to 20 carbon atoms which may be separated by a heteroatom selected from oxygen, sulfur and nitrogen atoms or carbonyl carbon, k and m are each independently an integer of 1 to 3, preferably 2 or 3.

Examples of the C₁-C₄ alkyl group represented by R¹ to R⁴ include methyl, ethyl, propyl, isopropyl, n-butyl, sec-butyl, and tert-butyl. R¹ to R⁴ may be the same or different. Preferably R¹ is methyl or ethyl, and R⁴ is methyl.

B stands for a divalent hydrocarbon group, typically alkylene, of 1 to 20 carbon atoms, preferably 1 to 15 carbon atoms, and more preferably 1 to 10 carbon atoms. The divalent hydrocarbon group may be separated by -O-, -S-, -NH-, -N(CH₃)- or -C(=O)-. Also included are substituted hydrocarbon groups in which one or more hydrogen atoms are substituted by halogen atoms such as fluorine and chlorine. Preferably B is alkylene or fluorinated alkylene. Examples include -(CH₂)₂-, -(CH₂)₃-, -(CH₂)₄-, -(CH₂)₅-, -(CH₂)₆-, -(CH₂)₈-, -CH₂CH₂CH₂-NH-CH₂CH₂CH₂-, -CH₂CH₂CH₂-Sₜ-CH₂CH₂CH₂-, -CH₂CH₂-(CF₂)₂-CH₂CH₂-, and -CH₂CH₂-(CF₂)₄-CH₂CH₂-. Note that t is an integer of 1 to 4.

For water resistance of a cured coat and applicability to metal substrates, a compound having the general formula (3) is also preferred. 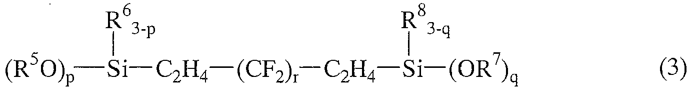 Herein R⁵ to R⁸ are each independently alkyl of 1 to 4 carbon atoms, as exemplified for R¹ to R⁴. R⁵ to R⁸ may be the same or different. The subscripts p and q are each independently an integer of 1 to 3, preferably 2 or 3, and r is an integer of 1 to 10, preferably 2 to 8.

Illustrative, non-limiting examples of component (ii) include bis(trimethoxysilylpropyl)amine, bis(triethoxysilylpropyl)amine, bis(trimethoxysilylpropyl)oligosulfide, bis(triethoxysilylpropyl)oligosulfide, bis(trimethoxysilyl)ethane, bis(triethoxysilyl)ethane, bis(trimethoxysilyl)propane, bis(triethoxysilyl)propane, bis(trimethoxysilyl)butane, bis(triethoxysilyl)butane, bis(trimethoxysilyl)heptane, bis(triethoxysilyl)heptane, bis(trimethoxysilyl)hexane, bis(triethoxysilyl)hexane, bis(trimethoxysilyl)octane, bis(triethoxysilyl)octane, 3,3,4,4-tetrafluoro-1,6-bis(trimethoxysilyl)hexane, 3,3,4,4-tetrafluoro-1,6-bis(triethoxysilyl)hexane, 3,3,4,4,5,5,6,6-octafluoro-1,8-bis(trimethoxysilyl)octane, 3,3,4,4,5,5,6,6-octafluoro-1,8-bis(triethoxysilyl)octane, etc.

Components (i) and (ii) are used in such amounts that a molar ratio of component (i) to component (ii) may range from 1.0 to 50, more preferably from 3.0 to 40, and even more preferably from 5.0 to 30. If a molar ratio (i)/(ii) < 1.0, indicating a lower proportion of epoxysilane, then the composition may become less water soluble and hence, less stable. If a molar ratio (i)/(ii) > 50, indicating a lower proportion of polyfunctional silyl compound, then the composition may lose film formability and be less adherent to steel strips.

### (iv) Hydrolyzable silyl group-containing organosilicon compound other than components (i) and (ii)

Component (iv) is at least one hydrolyzable silyl group-containing organosilicon compound other than the epoxy-containing silane coupling agent as component (i) and the organosilicon compound having at least two hydrolyzable silyl groups in a molecule, but free of epoxy group as component (ii).

Suitable organosilicon compounds used as component (iv) are commercially available alkoxysilanes and silane coupling agents. Examples include, but are not limited to, 3-aminopropyltrimethoxysilane, 3-aminopropyltriethoxysilane, N-2-(aminoethyl)-γ-aminopropyltrimethoxysilane, N-2-(aminoethyl)-γ-aminopropyltriethoxysilane, 3-(meth)acryloxypropyltrimethoxysilane, 3-(meth)acryloxypropyltriethoxysilane, vinyltrimethoxysilane, vinyltriethoxysilane, 3-chloropropyltrimethoxysilane, 3-mercaptopropyltrimethoxysilane, 3,3,3-trifluoropropyltrimethoxysilane, methyltrimethoxysilane, propyltrimethoxysilane, hexyltrimethoxysilane, octyltrimethoxysilane, decyltrimethoxysilane, phenyltrimethoxysilane, styryltrimethoxysilane, dimethyldimethoxysilane, dimethyldiethoxysilane, dimethyldimethoxysilane, diethyldiethoxysilane, and the like.

Component (iv) is preferably used in an amount of 0 to 3 moles, more preferably 0.1 to 2 moles per mole of component (i). Too much component (iv) may detract from the stability of the aqueous solution.

### (iii) Aqueous silica sol

The aqueous silica sol as component (iii) may be any of commercially available silica sol products as long as they are dispersible in water. In general, preference is given to a cationic colloidally disperse silica sol having a solids content of 1 to 50% by weight, preferably 5 to 40% by weight and a silica sol of hollow structure having voids as silica inclusions. The dispersing medium is preferably water, but may be a lower alcohol as the aqueous medium which is miscible with water. The silica sol is generally at pH 3 to 5. An acidic silica sol is thus preferred although an alkaline or neutral stabilized silica sol may also be used. The silica sol used herein includes not only aqueous amorphous SiO₂ particles, but also composite oxides containing an AlO, TiO, ZrO or FeO bond as well as a SiO bond within the molecule. In the latter case, the bond other than SiO should preferably be up to 50 mol%, more preferably up to 20 mol%.

As an optional component, an aqueous element oxide formed by the sol-gel method, for example, an oxide such as aluminum oxide, titanium oxide, zirconium oxide or zinc oxide may be blended. The amount of the other element oxide blended is preferably less than the amount of silica sol blended.

Component (iii) is preferably used in such an amount that a ratio of the solids weight of component (iii) to the total weight of components (i) and (ii) or components (i), (ii) and (iv), if component (iv) is used, that is, (iii)/[(i)+(ii)+(iv)] is up to 1.0 and more preferably up to 0.95. If (iii)/[(i)+(ii)+(iv)] > 1.0, then the composition may be less stable and tend to undergo viscosity buildup and gelation with the lapse of time. For improved corrosion control and strength, the ratio (iii)/[(i)+(ii)+(iv)] is preferably at least 0.1, more preferably at least 0.4.

The composition of the invention may be prepared by subjecting components (i) to (iii) and optionally, component (iv) in water to cohydrolytic reaction or (partial) cohydrolytic condensation reaction, and removing the alcohol resulting from the reaction. By the removal step, the alcohol content of the composition can be reduced to 5% by weight or below.

Cohydrolytic reaction or (partial) cohydrolytic condensation reaction is preferably effected in the presence of an acid catalyst such as acetic acid, hydrochloric acid or sulfuric acid, or an alkaline catalyst such as sodium hydroxide, potassium hydroxide or tetramethylammonium hydroxide. The catalyst may be used in a catalytic amount, preferably 0.5 to 20 parts by weight, more preferably 1 to 10 parts by weight per 100 parts by weight of components (i) and (ii) combined.

An amount of water added for cohydrolytic reaction or (partial) cohydrolytic condensation reaction is preferably at least 1 mole, more preferably at least 2 moles, and even more preferably at least 5 moles per mole of total hydrolyzable groups in components (i), (ii) and (iv). The term "amount of water" as used herein is an overall amount of water including water originally contained in aqueous silica sol being added. Although the upper limit is not critical, it is preferred for ease of operation that the amount of water is up to 50 moles, and more preferably up to 20 moles. If the amount of water used for hydrolysis is too small, the aqueous solution may lose stability.

As to the conditions of the cohydrolysis or (partial) cohydrolytic condensation reaction step and the alcohol removal step, the reaction temperature is preferably 30 to 110°C, more preferably 40 to 80°C, and the alcohol removal step may be effected under a reduced pressure in order to promote removal. The reduced pressure for the alcohol removal step is preferably 60 hPa to atmospheric, more preferably 60 to 200 hPa, although the pressure is not limited to this range as long as the stability of the composition is not compromised. Too high a reaction temperature may detract from the stability of the composition whereas too low a reaction temperature may be less effective for alcohol removal, leading to a drop of production efficiency.

It is noted that an alcohol content may be measured by headspace gas chromatography. It is assumed that when the peak of an organic solvent detected by this measurement is 5%, for example, the alcohol content is 5% by weight.

Besides components (i) to (iv) mentioned above, the composition may further comprise a curing catalyst, leveling agent and other additives commonly used in the well-known prior art, as long as the overall composition is kept stable. Also, water-soluble organic resins and other materials which are compatible with and dispersible in the composition may also be contained as long as the overall composition is kept stable.

The composition of the invention is preferably adjusted to a solids content of 0.5 to 60% by weight. Specifically, the composition is heat dried such that the amount (g) of residual solids divided by the overall amount (g) of the composition may range from 0.05 to 0.6. If the solids content is less than 0.5% by weight, the composition forms a coat which may not exhibit satisfactory water resistance and primer effect. If the solids content is more than 60% by weight, the composition may become substantially unstable and difficult to prepare. More preferably the solids content is 5 to 50% by weight.

The composition finds main use as a surface treating agent. The substrate which can be treated with the surface treating agent is not particularly limited and may be an organic or inorganic substrate. Examples include cardboards, woodboards, chipboards, engineering plastics, organic coatings, stone, ceramics, metals and metal alloys. Among others, metal surfaces such as ferrous articles and galvanized articles are preferred. The composition of the invention forms on the metal surface a coat which has an improved corrosion control effect, is mechanically stable and hydrophobic, and assists in adhesion of an overlying organic resin material when the coat is overlaid therewith.

The surface treating agent primarily comprising the coating composition of the invention may be applied onto a substrate by conventional coating techniques. Any suitable technique may be selected from brush coating, spraying, dipping, flow coating, roll coating, curtain coating, spin coating, and knife coating, depending on the shape of a substrate, the desired coating thickness, and the desired coating state.

Once the surface treating agent is applied, it may be dried and then cured by holding in air or by heating. Although the curing temperature and time are not particularly limited, the coated substrate is usually heated at a temperature below the heat resistant temperature of the substrate, preferably 20 to 200°C, more preferably 40 to 150°C, for 10 seconds to 2 hours, more preferably 1 minute to 1 hour.

The coat (cured coat) of the surface treating agent preferably has a thickness of 0.1 to 50 µm, more preferably 1 to 10 µm, although the thickness of the coat is not particularly limited.

In the practice of the invention, once a substrate is coated with the surface treating agent as mentioned above, an overlying coat layer may be formed on the treated or primed surface. The overlying coat layer may be of coating compositions based on organic resins such as epoxy, melamine, phenolic and urethane resins, and silicone resins.

### EXAMPLE

Examples of the invention are given below by way of illustration and not by way of limitation. In Examples, an alcohol content was measured by headspace gas chromatography; a viscosity, specific gravity, and refractive index were measured at 25°C by a capillary kinematic viscometer, according to JIS Z8804, and according to JIS K0062, respectively. All parts are by weight.

### Example 1

A 1-L separable flask equipped with a stirrer, reflux condenser, dropping funnel, and thermometer was charged with 103.9 parts (0.44 mol) of γ-glycidoxypropyltrimethoxysilane (KBM403 by Shin-Etsu Chemical Co., Ltd.), 5.2 parts (0.09 mol) of acetic acid, and 10.3 parts (0.03 mol) of 3,3,4,4,5,5,6,6-octafluoro-1,8-bis(trimethoxysilyl)octane, which were mixed and stirred. 234.6 parts of an aqueous silica sol (Snowtex O by Nissan Chemical Industries, Ltd., SiO₂ content 20 wt%, acidic type) was added to the mixture, which was mixed and stirred at room temperature for 30 minutes, heated to an internal temperature of 80°C, mixed and stirred for a further 2 hours at the temperature. The reaction solution was cooled to an internal temperature of about 60°C, combined with 89.1 parts of deionized water, and stirred, after which the methanol resulting from the reaction was distilled off at an internal temperature of about 60°C and a vacuum of about 120 to 170 hPa. The distillate at 170 hPa was composed mainly of methanol while the distillate at 120 hPa consisted of water and was free of methanol. After confirming the end, the methanol distillation step was stopped. Deionized water was added to the product so as to adjust the solids content to 30 wt%. This was a milky white opaque liquid having a viscosity of 4.4 mm²/s, a specific gravity of 1.13, a refractive index of 1.367, pH 2.8, and a methanol content of less than 0.1 wt%. This is designated surface treating agent #1.

### Example 2

A 1-L separable flask equipped with a stirrer, reflux condenser, dropping funnel, and thermometer was charged with 103.9 parts (0.44 mol) of γ-glycidoxypropyltrimethoxysilane (KBM403 by Shin-Etsu Chemical Co., Ltd.), 5.2 parts (0.09 mol) of acetic acid, and 10.3 parts (0.03 mol) of bistrimethoxysilylhexane, which were mixed and stirred. 234.6 parts of an aqueous silica sol (Snowtex O by Nissan Chemical Industries, Ltd.) was added to the mixture, which was mixed and stirred at room temperature for 30 minutes, heated to an internal temperature of 80°C, mixed and stirred for a further 2 hours at the temperature. The reaction solution was cooled to an internal temperature of about 60°C, combined with 89.1 parts of deionized water, and stirred, after which the methanol resulting from the reaction was distilled off at an internal temperature of about 60°C and a vacuum of about 120 to 170 hPa. The distillate at 170 hPa was composed mainly of methanol while the distillate at 120 hPa consisted of water and was free of methanol. After confirming the end, the methanol distillation step was stopped. Deionized water was added to the product so as to adjust the solids content to 30 wt%. This was a milky white opaque liquid having a viscosity of 4.2 mm²/s, a specific gravity of 1.13, a refractive index of 1.369, pH 2.7, and a methanol content of less than 0.1 wt%. This is designated surface treating agent #2.

### Example 3

A 1-L separable flask equipped with a stirrer, reflux condenser, dropping funnel, and thermometer was charged with 52 parts (0.22 mol) of γ-glycidoxypropyltrimethoxysilane (KBM403 by Shin-Etsu Chemical Co., Ltd.), 29.9 parts (0.22 mol) of methyltrimethoxysilane (KBM13 by Shin-Etsu Chemical Co., Ltd.), 5.2 parts (0.09 mol) of acetic acid, and 10.3 parts (0.03 mol) of 3,3,4,4,5,5,6,6-octafluoro-1,8-bis(trimethoxysilyl)octane, which were mixed and stirred. 159.3 parts of an aqueous silica sol (Snowtex O by Nissan Chemical Industries, Ltd.) was added to the mixture, which was mixed and stirred at room temperature for 30 minutes, heated to an internal temperature of 80°C, mixed and stirred for a further 2 hours at the temperature. The reaction solution was cooled to an internal temperature of about 60°C, combined with 60.5 parts of deionized water, and stirred, after which the methanol resulting from the reaction was distilled off at an internal temperature of about 60°C and a vacuum of about 120 to 170 hPa. The distillate at 170 hPa was composed mainly of methanol while the distillate at 120 hPa consisted of water and was free of methanol. After confirming the end, the methanol distillation step was stopped. Deionized water was added to the product so as to adjust the solids content to 30 wt%. This was a milky white opaque liquid having a viscosity of 5.9 mm²/s, a specific gravity of 1.13, a refractive index of 1.365, pH 2.5, and a methanol content of less than 0.1 wt%. This is designated surface treating agent #3.

### Example 4

A 1-L separable flask equipped with a stirrer, reflux condenser, dropping funnel, and thermometer was charged with 77.9 parts (0.33 mol) of γ-glycidoxypropyltrimethoxysilane (KBM403 by Shin-Etsu Chemical Co., Ltd.), 13.2 parts (0.11 mol) of dimethyldimethoxysilane (KBM22 by Shin-Etsu Chemical Co., Ltd.), 5.2 parts (0.09 mol) of acetic acid, and 10.3 parts (0.03 mol) of 3,3,4,4,5,5,6,6-octafluoro-1,8-bis(trimethoxysilyl)octane, which were mixed and stirred. 186.3 parts of an aqueous silica sol (Snowtex O by Nissan Chemical Industries, Ltd.) was added to the mixture, which was mixed and stirred at room temperature for 30 minutes, heated to an internal temperature of 80°C, mixed and stirred for a further 2 hours at the temperature. The reaction solution was cooled to an internal temperature of about 60°C, combined with 71 parts of deionized water, and stirred, after which the methanol resulting from the reaction was distilled off at an internal temperature of about 60°C and a vacuum of about 120 to 170 hPa. The distillate at 170 hPa was composed mainly of methanol while the distillate at 120 hPa consisted of water and was free of methanol. After confirming the end, the methanol distillation step was stopped. Deionized water was added to the product so as to adjust the solids content to 30 wt%. This was a milky white opaque liquid having a viscosity of 4.7 mm²/s, a specific gravity of 1.12, a refractive index of 1.367, pH 2.6, and a methanol content of less than 0.1 wt%. This is designated surface treating agent #4.

### Comparative Example 1

A 1-L separable flask equipped with a stirrer, reflux condenser, dropping funnel, and thermometer was charged with 103.9 parts (0.44 mol) of γ-glycidoxypropyltrimethoxysilane (KBM403 by Shin-Etsu Chemical Co., Ltd.) and 5.2 parts (0.09 mol) of acetic acid, which were mixed and stirred. 234.6 parts of an aqueous silica sol (Snowtex O by Nissan Chemical Industries, Ltd.) was added to the mixture, which was mixed and stirred at room temperature for 30 minutes, heated to an internal temperature of 80°C, mixed and stirred for a further 2 hours at the temperature. The reaction solution was cooled to an internal temperature of about 60°C, combined with 89.1 parts of deionized water, and stirred, after which the methanol resulting from the reaction was distilled off at an internal temperature of about 60°C and a vacuum of about 120 to 170 hPa. The distillate at 170 hPa was composed mainly of methanol while the distillate at 120 hPa consisted of water and was free of methanol. After confirming the end, the methanol distillation step was stopped. Deionized water was added to the product so as to adjust the solids content to 30 wt%. This was a milky white opaque liquid having a viscosity of 5.0 mm²/s, a specific gravity of 1.12, a refractive index of 1.369, pH 2.8, and a methanol content of less than 0.1 wt%. This is designated surface treating agent #5.

### Comparative Example 2

A 1-L separable flask equipped with a stirrer, reflux condenser, dropping funnel, and thermometer was charged with 103.9 parts (0.44 mol) of γ-glycidoxypropyltrimethoxysilane (KBM403 by Shin-Etsu Chemical Co., Ltd.), 5.2 parts (0.09 mol) of acetic acid, and 10.3 parts (0.03 mol) of tetrabutoxytitanium, which were mixed and stirred. 234.6 parts of an aqueous silica sol (Snowtex O by Nissan Chemical Industries, Ltd.) was added to the mixture, which was mixed and stirred at room temperature for 30 minutes, heated to an internal temperature of 80°C, mixed and stirred for a further 2 hours at the temperature. The reaction solution was cooled to an internal temperature of about 60°C, combined with 89.1 parts of deionized water, and stirred, after which the methanol resulting from the reaction was distilled off at an internal temperature of about 60°C and a vacuum of about 120 to 170 hPa. The distillate at 170 hPa was composed mainly of methanol while the distillate at 120 hPa consisted of water and was free of methanol. After confirming the end, the methanol distillation step was stopped. Deionized water was added to the product so as to adjust the solids content to 30 wt%. This was a milky white opaque liquid having a viscosity of 3.3 mm²/s, a specific gravity of 1.13, a refractive index of 1.370, pH 2.7, and a methanol content of less than 0.1 wt%. This is designated surface treating agent #6.

### Comparative Example 3

A 1-L separable flask equipped with a stirrer, reflux condenser, dropping funnel, and thermometer was charged with 103.9 parts (0.44 mol) of γ-glycidoxypropyltrimethoxysilane (KBM403 by Shin-Etsu Chemical Co., Ltd.), 5.2 parts (0.09 mol) of acetic acid, and 10.3 parts (0.03 mol) of tetrabutoxytitanium, which were mixed and stirred. 650 parts of an aqueous silica sol (Snowtex O by Nissan Chemical Industries, Ltd.) was added to the mixture, which was mixed and stirred at room temperature for 30 minutes, heated to an internal temperature of 80°C, mixed and stirred for a further 2 hours at the temperature. The reaction solution was cooled to an internal temperature of about 60°C, combined with 280.1 parts of deionized water, and stirred, after which the methanol resulting from the reaction was distilled off at an internal temperature of about 60°C and a vacuum of about 120 to 170 hPa. The distillate at 170 hPa was composed mainly of methanol while the distillate at 120 hPa consisted of water and was free of methanol. After confirming the end, the methanol distillation step was stopped. Deionized water was added to the product so as to adjust the solids content to 30 wt%. This was a milky white opaque liquid having a viscosity of 8.3 mm²/s, a specific gravity of 1.17, a refractive index of 1.370, pH 2.7, and a methanol content of less than 0.1 wt%. This is designated surface treating agent #7.

### Stability of treating agent

Each of the surface treating agents prepared above was fed into a plastic bottle which was sealed and held at room temperature (RT) for a period of time. At intervals, the liquid was visually observed for outer appearance and fluidity. The evaluation results are shown in Table 1.

### Applicability to steel strip

A cold-rolled steel strip was polished with abrasive slurry to render the surface hydrophilic. Each of the surface treating agents prepared above was flow coated onto the steel strip surface. It was observed how the steel strip was wetted with the agent. The evaluation results are shown in Table 1.
○: uniform coating
Δ: slight wrinkle at edge
×: cissing, uneven coating

### Salt spray test

A salt spray test was carried out for evaluating the durability against salt water spraying. Each of the surface treating agents prepared above was flow coated onto a steel strip as above to a thickness of 3 µm and heat dried at 150°C for one hour, yielding a treated steel strip as a test piece. A salt spray cycle consisting of spraying 5 wt% salt water to the treated steel strip, holding it horizontal, drying at room temperature for 3 hours, and spraying again 5 wt% salt water was repeated. At time intervals, a degree of corrosion on the steel strip was visually observed. The evaluation results are shown in Table 1.
⊚: no corrosion
○: slight corrosion at edge
Δ: slight corrosion over entire strip
×: substantial corrosion over entire strip

**Table 1**

| | | Stability of treating agent | Applicability to steel strip | Salt spray test | | |
|---|---|---|---|---|---|---|
| | | | | After 24 hr | After 72 hr | After 144 hr |
| Example | 1 | stable at RT for > 1 month | ○ | ⊚ | ○ | Δ |
| | 2 | stable at RT for > 1 month | ○ | ⊚ | ○ | Δ |
| | 3 | stable at RT for > 1 month | ○ | ⊚ | ⊚ | ⊚ |
| | 4 | stable at RT for > 1 month | ○ | ⊚ | ⊚ | ○ |
| Comparative Example | 1 | stable at RT for > 1 month | × | × | × | × |
| | 2 | stable at RT for > 1 month | Δ | Δ | × | × |
| | 3 | gelled at RT after 3 days | Δ | ○ | Δ | × |

The results of Examples and Comparative Examples demonstrate that the coats formed of the treating agents according to the invention have improved applicability to steel strips and offer satisfactory rust prevention and water resistance.

## Claims

1. Aqueous siloxane coating composition comprising a cohydrolysate and/or (partial) cohydrolytic condensate obtained from hydrolysis of
(i) an epoxy-containing silane coupling agent,
(ii) an organosilicon compound as a crosslinker, having at least two hydrolysable silyl groups in a molecule, but free of epoxy group,
optionally, (iv) other alkoxysilane or silane coupling agent, not being an epoxy-containing silane coupling agent or organosilicon compound having at least two hydrolysable silyl groups in a molecule and free of epoxy group,
optionally in the presence of (iii) an aqueous silica sol,
component (ii) being a compound having the general formula (2): 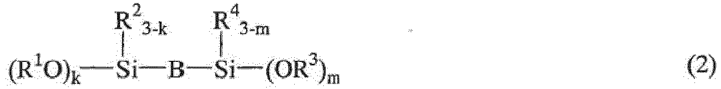 wherein R¹ to R⁴ are each independently alkyl of 1 to 4 carbon atoms, B is an optionally substituted, divalent straight or branched hydrocarbon group of 1 to 20 carbon atoms, which may be separated by a heteroatom selected from oxygen, sulfur and nitrogen atoms, or by carbonyl carbon, and k and m are each independently an integer of 1 to 3, and
said cohydrolysate and/or (partial) cohydrolytic condensate being dissolved and/or dispersed in water, and the composition having an alcohol content of up to 5% by weight.

2. The composition of claim 1 wherein component (i) is a compound having the general formula (1): 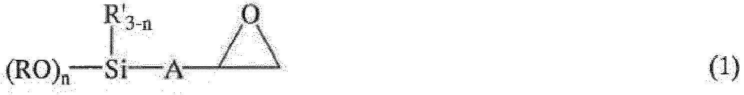 wherein R and R' are each independently alkyl of 1 to 4 carbon atoms, A is a divalent hydrocarbon group of 1 to 10 carbon atoms which may be separated by an oxygen atom, and n is an integer of 1 to 3.

3. The composition of claims 1 or 2 wherein B is a divalent group selected from -(CH₂)₆-, -(CH₂)₈-, -CH₂CH₂CH₂-NH-CH₂CH₂CH₂-, -CH₂CH₂CH₂-Sₜ-CH₂CH₂CH₂-, -CH₂CH₂-(CF₂)₂-CH₂CH₂- and -CH₂CH₂-(CF₂) ₄-CH₂CH₂-, wherein t is an integer of 1 to 4.

4. The composition of claim 1 or 2 wherein component (ii) is selected from bis(triethoxysilyl)heptane, bis(trimethoxysilyl)hexane, bis(triethoxysilyl)hexane, bis(trimethoxysilyl)octane, bis(triethoxysilyl)octane, 3,3,4,4-tetrafluoro-1,6-bis(trimethoxysilyl)hexane, 3,3,4,4-tetrafluoro-1,6-bis(triethoxysilyl)hexane, 3,3,4,4,5,5,6,6-octafluoro-1,8-bis(trimethoxysilyl)octane, 3,3,4,4,5,5,6,6-octafluoro-1,8-bis(triethoxysilyl)octane.

5. The composition of claim 1 or 2 wherein component (ii) is a compound having the general formula (3): 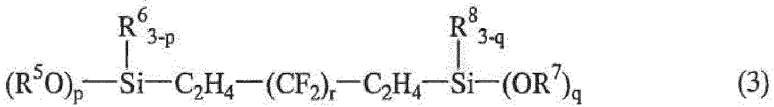 wherein R⁵ to R⁸ are each independently alkyl of 1 to 4 carbon atoms, p and q are each independently an integer of 1 to 3, and r is an integer of 1 to 10.

6. The composition of any one of claims 1 to 5 wherein component (i) and (ii) are in a molar ratio (i)/(ii) of from 1.0 to 50.

7. The composition of any one of claims 1 to 6 wherein a ratio of the solids weight of component (iii) to the total weight of components (i) and (ii) or components (i), (ii) and (iv), if component (iv) is used, is (iii)/[(i)+(ii)+(iv)] ≤ 1.0.

8. The composition of any one of claims 1 to 7, having a solids content of 0.5 to 60% by weight.

9. The composition of any one of claims 1 to 8 wherein the composition has an alcohol content of up to 2% by weight.

10. A method for preparing the aqueous siloxane coating composition of any one of claims 1 to 9, comprising the steps of subjecting components (i) and (ii), optionally component (iii), and optionally component (iv), to hydrolytic reaction or hydrolytic condensation reaction in water, and removing the alcohol resulting from the reaction until an alcohol content is reduced to 5% by weight or below.

11. A surface treating agent comprising the aqueous siloxane coating composition of any one of claims 1 to 9.

12. A steel article which is surface treated with the surface treating agent of claim 11.

13. A coated steel article comprising a steel article which is surface treated with the surface treating agent of claim 11 and a coat layer overlying the treated surface.

14. Use of a composition according to any one of claims 1 to 9 or agent according to claim 11 for treatment of metal articles, optionally followed by applying a coat layer over the treated surface.

15. Use according to claim 14, wherein the metal articles are steel articles.

## Patentansprüche

1. Wässrige Siloxanbeschichtungszusammensetzung, umfassend ein Kohydrolysat und/oder (teilweises) kohydrolytisches Kondensat, das aus der Hydrolyse der Folgenden erhalten wird:
(i) eines Epoxy enthaltenden Silan-Kupplungsmittels,
(ii) einer Organosiliciumverbindung als Vernetzer mit zumindest zwei hydrolysierbaren Silylgruppen in einem Molekül, aber ohne Epoxygruppe,
gegebenenfalls (iv) eines anderen Alkoxysilan- oder Silan-Kupplungsmittels, das kein Epoxy enthaltendes Silankupplungsmittel ist, oder einer anderen Organosiliciumverbindung mit zumindest zwei hydrolysierbaren Silylgruppen in einem Molekül und ohne Epoxygruppe,
gegebenenfalls in Gegenwart von (iii) einem wässrigen Kieselsol,
wobei Komponente (ii) eine Verbindung mit der allgemeinen Formel (2) ist: 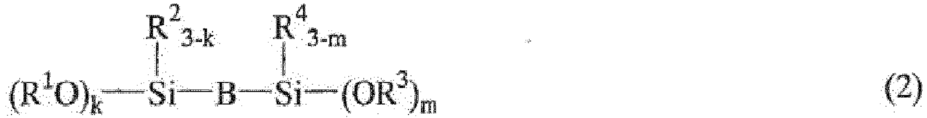 worin die R¹ bis R⁴ jeweils unabhängig Alkyl mit 1 bis 4 Kohlenstoffatomen sind, B eine gegebenenfalls substituierte, zweiwertige, unverzweigte oder verzweigte Kohlenwasserstoffgruppe mit 1 bis 20 Kohlenstoffatomen ist, die durch ein aus Sauerstoff-, Schwefel- und Stickstoffatomen ausgewähltes Heteroatom oder Carbonylkohlenstoff getrennt sein kann, und k und m jeweils unabhängig eine ganze Zahl von 1 bis 3 sind und
das Kohydrolysat und/oder (teilweise) kohydrolytische Kondensat in Wasser gelöst und/oder dispergiert ist und die Zusammensetzung einen Alkoholgehalt von bis zu 5 Gew.-% aufweist.

2. Zusammensetzung nach Anspruch 1, wobei die Komponente (i) eine Verbindung der allgemeinen Formel (1) ist: 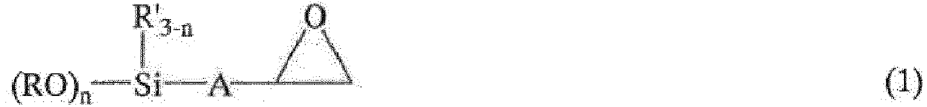 worin R und R' jeweils unabhängig Alkyl mit 1 bis 4 Kohlenstoffatomen sind, A eine zweiwertige Kohlenwasserstoffgruppe mit 1 bis 10 Kohlenstoffatomen ist, die durch ein Sauerstoffatom getrennt sein kann, und n eine ganze Zahl von 1 bis 3 ist.

3. Zusammensetzung nach Anspruch 1 oder 2, wobei B eine zweiwertige Gruppe ist, die aus -(CH₂)₆-, -(CH₂)₈-, -CH₂CH₂CH₂-NH-CH₂CH₂CH₂-, -CH₂CH₂CH₂-Sₜ-CH₂CH₂CH₂-, -CH₂CH₂-(CF₂)₂-CH₂CH₂- und -CH₂CH₂-(CF₂)₄-CH₂CH₂- ausgewählt ist, worin t eine ganze Zahl von 1 bis 4 ist.

4. Zusammensetzung nach Anspruch 1 oder 2, wobei die Komponente (ii) aus Bis(triethoxysilyl)heptan, Bis(trimethoxysilyl)hexan, Bis(triethoxysilyl)hexan, Bis(tri-methoxysilyl)octan, Bis(triethoxysilyl)octan, 3,3,4,4-Tetrafluor-1,6-bis(trimethoxysilyl)-hexan, 3,3,4,4-Tetrafluor-1,6-bis(triethoxysilyl)hexan, 3,3,4,4,5,5,6,6-Octafluor-1,8-bis(trimethoxysilyl)octan, 3,3,4,4,5,5,6,6-Octafluor-1,8-bis(triethoxysilyl)octan ausgewählt ist.

5. Zusammensetzung nach Anspruch 1 oder 2, wobei die Komponente (ii) eine Verbindung der allgemeinen Formel (3) ist: 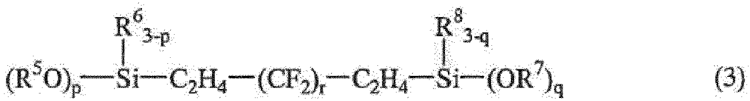 worin R⁵ bis R⁸ jeweils unabhängig Alkyl mit 1 bis 4 Kohlenstoffatomen sind, p und q jeweils unabhängig eine ganze Zahl von 1 bis 3 sind und r eine ganze Zahl von 1 bis 10 ist.

6. Zusammensetzung nach einem der Ansprüche 1 bis 5, wobei die Komponenten (i) und (ii) in einem Molverhältnis (i)/(ii) von 1,0 bis 50 vorliegen.

7. Zusammensetzung nach einem der Ansprüche 1 bis 6, wobei ein Verhältnis des Feststoffgewichts von Komponente (iii) zum Gesamtgewicht der Komponenten (i) und (ii) oder der Komponenten (i), (ii) und (iv), wenn die Komponente (iv) verwendet wird, (iii)/[(i)+(ii)+(iv)] ≤ 1,0 beträgt.

8. Zusammensetzung nach einem der Ansprüche 1 bis 7 mit einem Feststoffgehalt von 0,5 bis 60 Gew.-%.

9. Zusammensetzung nach einem der Ansprüche 1 bis 8, wobei die Zusammensetzung einen Alkoholgehalt von bis zu 2 Gew.-% aufweist.

10. Verfahren zur Herstellung einer wässrigen Siloxanbeschichtungszusammensetzung nach einem der Ansprüche 1 bis 9, umfassend die Schritte des Unterziehens der Komponenten (i) und (ii), gegebenenfalls Komponente (iii) und gegebenenfalls Komponente (iv), einer Hydrolysereaktion oder einer hydrolytischen Kondensationsreaktion in Wasser und des Entfernens des Alkohols, der aus der Reaktion resultiert, bis der Alkoholgehalt auf 5 Gew.-% oder weniger verringert ist.

11. Oberflächenbehandlungsmittel, umfassend eine wässrige Siloxanbeschichtungszusammensetzung nach einem der Ansprüche 1 bis 9.

12. Stahlartikel, der mit einem Oberflächenbehandlungsmittel nach Anspruch 11 behandelt ist.

13. Beschichteter Stahlartikel, umfassend einen Stahlartikel, der mit einem Oberflächenbehandlungsmittel nach Anspruch 11 und einer Beschichtungsschicht über der behandelten Oberfläche oberflächenbehandelt wurde.

14. Verwendung einer Zusammensetzung nach einem der Ansprüche 1 bis 9 oder eines Mittels nach Anspruch 11 zur Behandlung von Metallartikeln, gegebenenfalls gefolgt vom Aufbringen einer Beschichtungsschicht über der behandelten Oberfläche.

15. Verwendung nach Anspruch 14, bei der die Metallartikel Stahlartikel sind.

## Revendications

1. Composition aqueuse de revêtement de siloxane comprenant un co-hydrolysat et/ou un condensat co-hydrolytique (partiel) obtenu à partir de l'hydrolyse de
(i) un agent de couplage au silane contenant un époxy,
(ii) un composé organique du silicium servant d'agent de réticulation, ayant au moins deux groupes silyle hydrolysables par molécule, mais exempt de groupe époxy,
éventuellement (iv) un autre alcoxysilane ou agent de couplage au silane, qui n'est pas un agent de couplage au silane contenant un époxy ou un composé organique du silicium ayant au moins deux groupes silyle hydrolysables par molécule et exempt de groupe époxy,
éventuellement en présence de (iii) un sol aqueux de silice,
le composant (ii) étant un composé de formule générale (2) 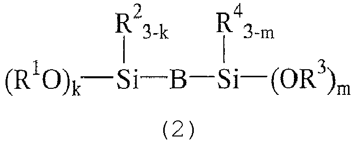 dans laquelle chacun de R¹ à R⁴ est indépendamment un alkyle ayant 1 à 4 atomes de carbone, B est un groupe hydrocarboné divalent linéaire ou ramifié, éventuellement substitué, ayant 1 à 20 atomes de carbone qui peuvent être séparés par un hétéroatome choisi parmi les atomes d'oxygène, de soufre et d'azote, ou par un carbone de carbonyle, et chacun de k et m est indépendamment un entier de 1 à 3, et
ledit co-hydrolysat et/ou condensat co-hydrolytique (partiel) étant dissous et/ou dispersé dans l'eau, et la composition ayant une teneur en alcool allant jusqu'à 5 % en poids.

2. Composition selon la revendication 1, dans laquelle le composant (i) est un composé de formule générale (1) : 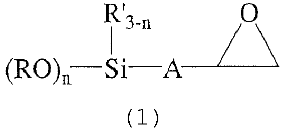 dans laquelle chacun de R et R' est indépendamment un alkyle ayant 1 à 4 atomes de carbone, A est un groupe hydrocarboné divalent ayant 1 à 10 atomes de carbone qui peuvent être séparés par un atome d'oxygène, et n est un entier de 1 à 3.

3. Composition selon la revendication 1 ou 2, dans laquelle B est un groupe divalent choisi parmi -(CH₂)₆-, -(CH₂)₈-, -CH₂CH₂CH₂-NH-CH₂CH₂CH₂-, -CH₂CH₂CH₂-Sₜ-CH₂CH₂CH₂-, -CH₂CH₂-(CF₂)₂-CH₂CH₂- et -CH₂CH₂-(CF₂)₄-CH₂CH₂-, où t est un entier de 1 à 4.

4. Composition selon la revendication 1 ou 2, dans laquelle le composant (ii) est choisi parmi le bis(triéthoxysilyl)heptane, le bis(triméthoxysilyl)hexane, le bis(triéthoxysilyl)hexane, le bis(triméthoxysilyl)octane, le bis(triéthoxysilyl)octane, le 3,3,4,4-tétrafluoro-1,6-bis(triméthoxysilyl)hexane, le 3,3,4,4-tétrafluoro-1,6-bis(triéthoxysilyl)hexane, le 3,3,4,4,5,5,6,6-octafluoro-1,8-bis(triméthoxysilyl)octane et le 3,3,4,4,5,5,6,6-octafluoro-1,8-bis(triéthoxysilyl)octane.

5. Composition selon la revendication 1 ou 2, dans laquelle le composant (ii) est un composé de formule générale (3) : 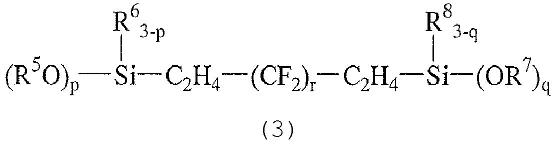 dans laquelle chacun de R⁵ à R⁸ est indépendamment un alkyle ayant 1 à 4 atomes de carbone, chacun de p et q est indépendamment un entier de 1 à 3, et r est un entier de 1 à 10.

6. Composition selon l'une quelconque des revendications 1 à 5, dans laquelle le composant (i) et le composant (ii) sont présents en un rapport molaire (i)/(ii) de 1,0 à 50.

7. Composition selon l'une quelconque des revendications 1 à 6, dans lequel le rapport du poids des solides du composant (iii) au poids des solides des composants (i) et (ii) ou des composants (i), (ii) et (iv), si le composant (iv) est utilisé, est (iii)/[(i)+(ii)+(iv)] ≤ 1,0.

8. Composition selon l'une quelconque des revendications 1 à 7, ayant une teneur en solides de 0,5 à 60 % en poids.

9. Composition selon l'une quelconque des revendications 1 à 8, laquelle composition a une teneur en alcool allant jusqu'à 2 % en volume.

10. Procédé pour préparer la composition aqueuse de revêtement de siloxane de l'une quelconque des revendications 1 à 9, comprenant les étapes consistant à soumettre les composants (i) et (ii), éventuellement le composant (iii), et éventuellement le composant (iv), à une réaction hydrolytique ou à une réaction de condensation hydrolytique dans de l'eau, et à éliminer l'alcool résultant de la réaction jusqu'à ce que la teneur en alcool soit réduite à 5 % en poids ou moins.

11. Agent de traitement de surface comprenant la composition aqueuse de revêtement de siloxane de l'une quelconque des revendications 1 à 9.

12. Article en acier qui est traité en surface avec l'agent de traitement de surface de la revendication 11.

13. Article en acier revêtu comprenant un article en acier qui est traité en surface avec l'agent de traitement de surface de la revendication 11 et une couche de revêtement recouvrant la surface traitée.

14. Utilisation d'une composition selon l'une quelconque des revendications 1 à 9 ou d'un agent selon la revendication 11 pour le traitement d'articles métalliques, suivi éventuellement de l'application d'une couche de revêtement sur la surface traitée.

15. Utilisation selon la revendication 14, dans laquelle les articles métalliques sont des articles en acier.
